(19)

Europäisches
Patentamt
European
Patent Office
Office européen
des brevets

(11) **EP 4 231 238 A1**

(12) **EUROPEAN PATENT APPLICATION**

(43) Date of publication:
**23.08.2023 Bulletin 2023/34**

(21) Application number: **22157055.9**

(22) Date of filing: **16.02.2022**

(51) International Patent Classification (IPC):
***G06T 7/33*** *(2017.01)*

(52) Cooperative Patent Classification (CPC):
**G06T 7/344;** G06T 2207/10028; G06T 2207/30164

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Siemens Aktiengesellschaft
80333 München (DE)**

(72) Inventor: **The designation of the inventor has not
yet been filed**

(74) Representative: **Siemens Patent Attorneys
Postfach 22 16 34
80506 München (DE)**

(54) **METHOD FOR SPATIALLY ALIGNING A POINT CLOUD**

(57)    A method for aligning a point cloud that represents a three-dimensional object or a part of such an object, to a second dataset that represents said object or a part of said object comprises the steps of segmenting the point cloud and the second dataset into partitions, each partition comprising a subset of the points of the point cloud or a subset of the dataset, respectively, generating feature descriptors for some or all of the partitions of the point cloud and for some or all of the partitions of the second dataset, wherein the feature descriptors are derived from characteristics of the points of the partition, comparing feature descriptors of the point cloud and the second dataset to identify partitions of the point cloud and second dataset that correspond to each other and performing a spatial alignment using the identified partitions.

FIG 1

## Description

The present invention relates to aligning a point cloud, that is, a set of three-dimensional points representing an object, to another point cloud or to a dataset representing the same object.

Some industrial applications, for example a surface inspection after a coating process conducted on an object such as a tube, include providing a scan of the surface of the object. Such a scan delivers three-dimensional point data that represents the surface structure of the scanned object. Depending on the device that the scan is conducted with, the scan may also include optical surface data such as color or texture.

In the case of an object that is not flat, for example in the case of a tube, such a scan cannot be conducted using a single exposure to the scanner device. Instead, the scanner device must be pointed at multiple parts of the surface of the object and then a partial scan be performed. The resulting point cloud that represents the surface of the scanned object is thus split up into multiple point clouds. In order to arrive at a complete surface representation for the object, the point clouds must then be re-assembled into a single point cloud.

However, each of those point clouds has its own alignment in three-dimensional space which derives from the position and orientation of the scanner device relative to the object when the scan was performed. Typically, with complex objects, these positions and orientations are very varied. Therefore, among each other, the resulting point clouds have no pre-known spatial relationship. This relationship must first be established which can happen either by aligning the point clouds with each other - which requires the point clouds to have overlapping areas - or aligning the point clouds at a dataset that represents the object such as CAD data or a complete pre-assembled point cloud. As the point clouds resulting from such scans may contain thousands of points, assembling and aligning them is a computationally expensive process.

A solution to this is obtaining information about the orientation and position of the scanner device when a scan is performed. An automated scanner system using a robotic arm can have such information but is expensive and not always feasible. Tracking a hand-held device also has limitations as the person holding it as well as the object itself can easily get in the way of such tracking. Therefore, the problem of unknown point cloud alignment cannot be finally solved in this way in all circumstances.

It is also known to employ markers that are applied physically to the object or are projected optically onto the object surface to provide an identification of parts of the surface. Applying physical markers to an object is not always feasible however and optical projection may fail for the reasons given above for tracking a hand-held device.

It is an object of the present invention to provide a method for aligning a point cloud representing an object to another point cloud or to a dataset that also represents that object.

This is achieved by a method for aligning a point cloud that represents a three-dimensional object or a part of such an object, to a second dataset that represents said object or a part of said object, according to the invention.

In this method, in a first step, the point cloud and the second dataset are segmented into partitions, wherein each partition comprises a subset of the points of the point cloud or a subset of the dataset, respectively. In a second step feature descriptors for some or all of the partitions of the point cloud and feature descriptors for some or all of the partitions of the second dataset are generated. The feature descriptors are derived from characteristics of the points of the partition, of points of other partitions or of feature descriptors of other partitions.

In a third step, the generated feature descriptors of the point cloud and the second dataset are compared to identify partitions of the point cloud and second dataset that correspond to each other. Based on the result of this comparison, a spatial alignment using the identified partitions is performed in a fourth step.

The feature descriptors comprise one or more of the following: size of the point cloud, contour of the point cloud, shortest and/or longest distance of points of the point cloud, curvature of the point cloud, orientation, center of gravity, neighbor information, normal vector, distribution, type, and texture.

A point cloud is understood to be a data collection of points in three-dimensional space represented typically as three coordinates for each such point. The points of the point cloud can theoretically have any spatial arrangement but when resulting from a surface scan of the object they will typically represent the surface of the object and thus be arranged along a flat or curved two-dimensional form. The point clouds may have at least 10000 points, or in some configurations at least 100000 points and in some embodiments more than one million points.

The second dataset is understood to represent the same object or part of it but there is no known relation between the three-dimensional coordinates of the first point cloud and the second dataset. In other words, there may be any translation and rotation between corresponding parts of the first point cloud and second dataset.

The partitions generated in the first step may be generated in such a way that they do not overlap within the first point cloud. In other words, no point in the first point cloud belongs to more than one partition. In other embodiments, the partitions may be generated in a way that partitions can overlap, i.e., in such a way that some points of the first point cloud belong to more than one partition. In both of the above cases, partitions may be generated in such a way that some points of the first point cloud belong to no partition.

The advantage of the method according to the invention is that the computational complexity of the comparison of the first point cloud and the dataset or of the partitions is reduced greatly by switching from a comparison of the points themselves to the comparison of the generated feature descriptors, as the number of feature descriptors is much lower than the number of points in the first point cloud.

Also, the feature descriptors are applied automatically, thus reducing manual interaction during the process of alignment. Also, with using natural geometric features of the object for partitioning the point cloud, there is less of a need for complex part mounting during the scanning process as the object position and orientation are not as important.

The feature descriptors also allow a manual interaction, i.e., a manual comparison to find corresponding partitions whereas a when comparing the points of the partitions such manual input into the comparison is much more difficult.

The method according to the invention scales well for different object sizes. Due to the reduction to the feature descriptors the size of the object and the number of points of the point cloud have much less of an impact on the overall computation difficulty than when working with the points directly.

Further features that may be added alone or together in exemplary embodiments of the invention include:

The feature descriptors may further comprise one or more of axis length and radius of a cylindrical representation of the points of the partition, and equation of a mathematical representation of the points of the partition. While axis length and radius are specific to a cylindrical geometry, the equation of a mathematical representation is more general in nature. The feature descriptors of such an equation include the type of equation as well as the parameters that the equation needs to result in an equation for a fixed surface geometry in space. While such an equation can be an equation for a cylinder or a plane, other geometries such as spherical, ellipsoid, cuboid or hyperbolic are also possible. Another possible mathematical description of a surface geometry that is very flexible is a Bezier surface which requires information about its degrees and control points.

Preferably an equal number of feature descriptors is assigned to some or all partitions. A feature descriptor may consist of the information that a certain type of feature is not applicable, e.g., that the points of the partition do not form a certain shape. The number of feature descriptors for each partition may be two, three or five, or in other embodiments even ten or more. It is advantageous to have as many feature descriptors as possible to have more data available for comparison between partitions. Even a high number such as twenty or thirty feature descriptors is still much lower than the typical number of points of a partition and the comparison still presents a much lower burden of computation that a comparison between the actual points of the point clouds.

The step of segmenting the point cloud may be arranged to separate the point cloud according to geometrical features of the point cloud. In other words, the segmentation may follow natural geometric features of the point cloud such that a partition comprises the points that make up one natural geometrical feature of the point cloud. Such natural geometrical features may be basic forms such as planes or cylinders, spheres or ellipsoids but may also be more complex features that are not set apart by being close to a basic geometric form.

The second dataset may be a point cloud itself such as a second scan of the same object of which the first point cloud is a scan. Both the first and second point clouds may presents parts of the surface of the object. Typically the first and second point loud represent different, but overlapping parts of the surface.

Alternatively, the second dataset may be a mathematical model of the object, such as a CAD model. This mathematical model is a mathematical representation of volumes or surfaces of the object, usually as an assembly of forms such as spheres, cylinders, planes, or triangles. In this case the second dataset may be a complete representation of the object. In this case, the first point cloud and the second dataset overlap completely as the first point cloud represents a part of the complete object surface.

Comparing the feature descriptors may comprise assembling a histogram of all generated feature descriptors.

An alignment of the point cloud with the second dataset that only involves translation, not rotation may be found by determining the bounding sphere for each. With the assumption that the bounding spheres are roughly the same for both the point cloud and the second dataset as they both represent the same object and the bounding spheres are rotation independent, moving the bounding spheres to coincide will mean that the sets of data would also coincide barring the correct rotation.

Octree data reduction may be used to reduce the number of points used in any of the other steps. Octree reduction overlays a point cloud with a grid of cubes which is increasingly broken into smaller cubes. Of all points in one of the smallest cubes only one is chosen thereby reducing the point count considerably while affecting the represented shape only minimally. It is advantageous to ascertain the same leaf node resolution for the point cloud and the second dataset.

Embodiments of the present invention are now described with reference to the accompanying drawings to which the invention is not limited. The illustrations of the drawings are in schematic form. It is noted that in different figures, similar or identical elements use the same reference signs.

Fig. 1 illustrates an object and multiple viewpoints for scanning the surface,

Fig. 2 illustrates a method of performing spatial alignment of first and second point clouds obtained from scanning the surface,

Fig. 3 illustrates a method of performing spatial alignment of a point cloud obtained from a scan of an object to CAD data of the object,

Fig. 4 shows a three-dimensional view of a second object obtained from its CAD data,

Fig. 5 shows a three-dimensional view of a point cloud obtained from a scan of the second object.

Fig. 6 shows triangles of centroid points and face normals of partitions of a point cloud obtained from scanning the surface and of CAD data of the object,

Fig. 7 shows the triangles after rotation and translation to make them congruent.

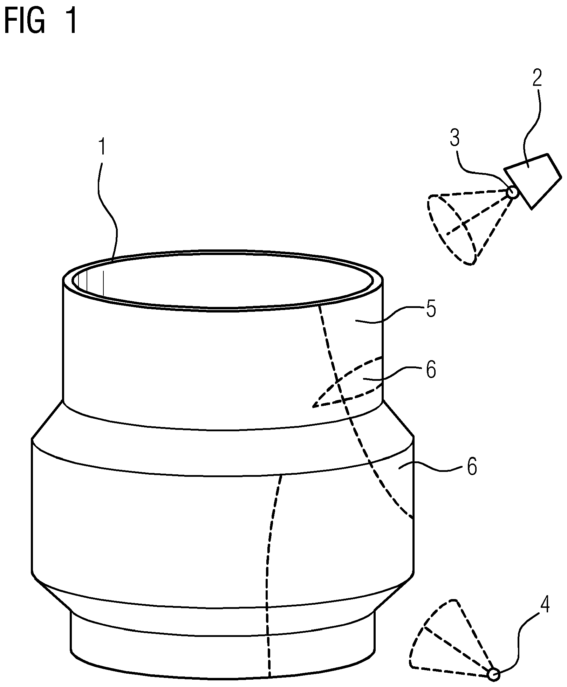

Fig. 1 shows an object 1 the surface of which is to be inspected and therefore scanned. The object 1 according to this example is a tube, that is, it is substantially cylindrical. Particularly, it is hollow and so has interior surfaces that can also be scanned. In addition, it has a thickened ring section where its exterior diameter is increased for part of its height.
It is clear from figure 1 that the entire surface of object 1 cannot be scanned in a single exposure from a single viewpoint. Instead, multiple viewpoints must be employed, and multiple scans performed. While it is possible to scan the entire interior surface from a single viewpoint, the resulting foreshortening may be undesirable and even the interior surface may be advantageously scanned from multiple viewpoints.
Figure 1 shows two such viewpoints 3, 4 where a scanning device 2 is held to perform a surface scan. Since the scanning device 2 is hand-held, neither the viewpoint nor the orientation and not even the distance to the surface are known values. The two viewpoints 3, 4 depicted in figure 1 are only examples and are not sufficient to scan the object 1 completely. While it is almost possible to scan the whole exterior surface of object 1 with two opposing viewpoints, assembling the resulting point clouds is best achieved with an overlap of the viewed surface areas and thus of the point clouds, so it is useful to use more than two viewpoints to scan the surface of an object such as object 1. Also features such as the thickened band of object 1 which obscure part of object 1 depending on the viewpoint may require even more viewpoints than a basic cylinder alone would.
Two different but overlapping surface areas 5, 6 are visible from the two viewpoints 3, 4 and the scans produce point clouds that represent these surface areas 5, 6. As can be seen from figure 1, there is considerable overlap between the surface areas 5, 6 that allows aligning and ultimately assembling the resulting point clouds to a complete point cloud that represents a bigger part or all of the surface of object 1.

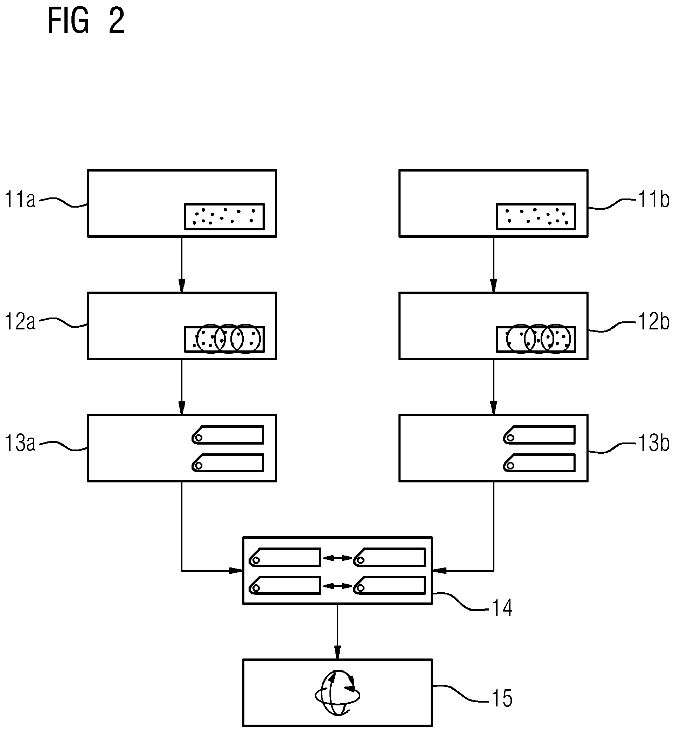

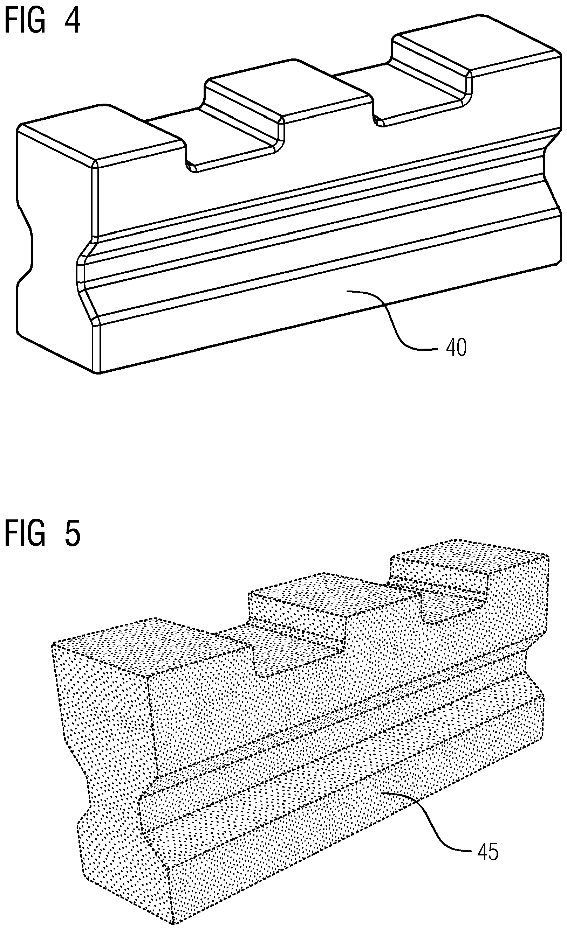

Fig. 2 shows a method according to an embodiment of the invention which comprises steps involved in performing a spatial alignment of a first point cloud to a second point cloud. In first steps 11a, b, both the first point cloud and the second point cloud are obtained by performing a surface scan of an object. Such an object can be for example a turbine blade of an electrical generator or object 1 of figure 1 or object 40 of figure 4.
The surface scan can be conducted using a scanner device 2 configured to obtain three-dimensional surface data of the parts of the object 1 that is scanned by the scanner system. The three-dimensional surface data obtained during a first, single scan has a single and fixed coordinate system; the relative positions of the points obtained in that single scan from, for example, the first viewpoint 3 are correct with respect to each other. However, the three-dimensional surface data obtained during a second scan from, for example, the second viewpoint 4 does not have a known relationship to the data obtained during the first scan. This means that corresponding points of the first scan and the second scan, i.e., points that represent the same surface area, may be rotated and translated with respect to each other. Additionally, the first and second scan of the object surface does not usually cover the exact same surface area but will typically only have overlapping parts. Thus, after performing the first and second scan there is no pre-existing knowledge about the existence of corresponding points or the relative translation and rotation of the scans.
In second steps 12a, b, both the first point cloud and the second point cloud are partitioned. This partitioning is conducted to follow the natural geometric features of the point clouds. In other words, the partitioning does not necessarily try to fit basic geometric forms such as planes and cylinders to the point clouds and perform a separation into these basic forms. Instead, the partitioning separates the point clouds into partitions 150 wherein the points of the partition 150 share a common geometric aspect. Such a geometric aspect may for example be a certain curvature, a basic or complex geometric form such as a plane, a cuboid or an ellipsoid.
The partitioning is conducted in such a way as to create partitions 150 that are substantially smaller than the point clouds themselves but on the other hand still combine enough points in each partition 150 that the number of partitions 150 is substantially smaller than the number of points in the respective point cloud.
In an alternative embodiment, the partitioning may be conducted by diving up the point clouds into partitions that correspond to some predefined basic geometric forms, for example planes, cylinders and spheres.
In third steps 13a, b, feature descriptors 20 are generated for the partitions 150 of both the first and second point cloud. The feature descriptors 20 comprise a set of features that are shared by the points or most of the points of a given partition 150. The feature descriptors may comprise any or all of the following list of options:

Size: This feature descriptor is the number of points contained in the partition 150. It may also be a relative measure of its number of points in relation to other, for example neighboring partitions 150. Since the partitions 150 follow the natural geometry of the object, different scans of overlapping surface areas are likely to have some partitions 150 that relate to the same natural geometric features. These will either have a similar number of points or, in case there are systematic differences between the scans, at least a similar ratio of the number of points to other partitions 150.

Contour: The contour describes the geometric form of the rim of the point cloud. This may for example be a trapezoid. With some geometric features, the contour of a partition 150 may be a simple and distinctive form.

Shortest and/or longest distance of points within the partition: This represents the overall extent of the partition.

Curvature: As the points of the point clouds represent the surface of the scanned object, they may be assigned a curvature. Ideally the partitioning is performed in such as a way as to result in partitions where a single curvature value is a good approximation of the surface form.

When analyzing planar partitions 150, a principal component analysis can be performed to find main axes for the partition 150 in the first and second principal component. A third principal component can be kept as a plane normal vector. This can be used similarly to centroid directions to other partitions 150 in that the relative orientation of normal vectors of different partitions 150 are likely to similar in the scan and the CAD object representation. In addition, the quotient of first two principal component lengths is the aspect ratio of the identified plane which can also be used as a feature of the partition 150. Furthermore the product of the two first principal component lengths is the area of the identified plane which can also be used as a feature of the partition 150.

Center of gravity (centroid): This feature descriptor notes the position of the center of gravity or centroid. The distances and directions between the centroids of different partitions 150 may also be used as part of this feature. Since distances and relative directions between the centroids of different partitions 150 are not changed by rotation or translation these provide good indicators of correspondence between partitions 150 of the scan and the CAD object representation.

Alpha shape: An alpha shape is a set of edges for a set of points. An edge is defined as a line between any two points of the set for which a circle of a given radius touches the two points does not enclose or touch any other points in the set. The alpha shape is roughly the outline of the set of points. The radius is a value that is open to optimization. If an octree data reduction is used, the radius can advantageously be chosen to be 1,5 times the octree resolution to find good alpha shapes.

Axis length and radius: This feature descriptor notes the height and radius of an approximately cylindrical partition 150.

Equation of a mathematical representation: This feature descriptor contains the parameters of a mathematical formula that the points of the partition 150 fulfil to a sufficient degree. Examples for such a mathematical representation are a polynomial and a Bezier surface. Other examples are the parameters of basic forms such as a cylinder. For a cylinder, as already noted, the parameters are the axis length and the radius as well as an anchor point and orientation of the axis.

In some ideal cases the parameters can be separated into first parameters that give information about absolute position and orientation of the mathematical representation and second parameters that give internal measurements of the partition 150. As the absolute position of the points is meaningless and the spatial orientation, i.e. rotation relative to the object of the scan, is unknown, the first parameters can then be disregarded for a comparison of the mathematical representation between two partitions 150 of two scans. The second parameters on the other hand may be very similar for two partitions 150 of two different scans that comprise roughly the same surface are of the object.

Neighbor information: This feature descriptor notes simplified information about neighboring partitions 150, such as the number of directly adjacent partitions 150 or relative directions to the centers of neighboring partition 150.

Normal vector: This feature descriptor contains one or more normal vectors of the surface area that is represented by the points of the partition 150.

Texture: In case the scans of the object are conducted with a system that is able to capture surface coloring of the object, this feature descriptor contains information about it. This information may for example be an average RGB color value, or lightness, saturation and hue. It may also have information about the spread of the mentioned color values over the surface area of the partition 150.

When feature descriptors have been calculated and assigned, a fourth step 14 is conducted wherein the feature descriptors of the first and second point clouds are compared to identify partitions of the first and second point cloud that correspond to each other.

For this comparison, different algorithms may be employed depending on the number of features used and the number of partitions 150 that are present as well as the computing power that is available.

For example, a correlation coefficient may be calculated between each pair of a first and second partition 150 where the first partition 150 is derived from the first point cloud and the second partition 150 is derived from the second point cloud. This correlation coefficient is a number that sums the individual correlations of the respective feature descriptors. The individual correlations in turn are calculated based on the specific feature descriptor. Each such individual correlation may be a formula incorporating and combining the information of the feature descriptor and a weight value that levels out numerical differences in the formulae and contains the relative importance with respect to other feature descriptors.

In a simple example, the correlation coefficient may be calculated from a single feature such as the aspect ratio of the identified planar partitions 150. To have a consistent value for the aspect ratio, it should be calculated as a / b, wherein a is the larger of the two sides of the plane (rectangle) and b the smaller, resulting in values for the aspect ratio >= 1. For any pair of partitions 150 of the scan data and CAD object representation, the correlation coefficient can be calculated as

$$1 - \frac{A_1 - A_2}{A_2}$$

Where $A_1$ is the larger of the two aspect ratios and $A_2$ the smaller. This results in values close to 1 for a good correlation (similar aspect ratios) and close to 0 for a bad correlation (widely different aspect ratios). The result is a correspondence matrix having values for each pair of partitions 150.

This example can be enhanced by calculating a second correlation coefficient the face area (a * b) of the identified planar partitions 150. Again, for any pair of partitions 150 of the scan data and CAD object representation, the correlation coefficient is calculated as above, leading to a correlation coefficient that may differ widely from that of the aspect ratio even though again the rectangle sides a and b are involved.

A total correlation is obtained by multiplying the correlation coefficients calculated above. This will likely reduce the amount of well-correlated partitions 150 considerably.

When final correlation coefficients have been found, a spatial alignment of the point clouds may be performed in a fifth step 15 using the identified partition pair or pairs with the highest correlation coefficients. If a mathematical representation has been found as a feature descriptor, it may comprise first parameters that give information about absolute position and orientation of the mathematical representation and second parameters that give internal measurements of the partition 150. While for the comparison of partitions 150 the second parameters are valuable, for the spatial alignment the first parameters may be more useful as they may already contain information about the relative positioning and rotation. For example, in the case of a cylinder form, the length of the axis vector is a second parameter that can be compared to other partitions that also have the form of a cylinder. The orientation of the axis on the other hand is a first parameter that when compared to the orientation of the axis of another partition directly results in the relative rotation between the partitions.

In the example of planar features, namely aspect ratio and face area, given above, lines of two feature centroids can be formed for each of the scan data and CAD object representation. The specific form created by the connected centroids and the associated plane normal in the scan data should correspond to the same form formed from corresponding partitions 150 of the CAD object when the correct rotation and translation is applied. For a line of two points the can correct rotation and translation can be calculated easily. Instead of a line between two centroids, three centroids of three partitions 150 can be used to form triangles with associated normal vectors for each of the points of the triangle which is a centroid of a partition 150. Such a triangle 50 is shown in fig. 5 together with the triangle 51 formed from its corresponding partition centroids of the CAD object data. The triangle 50 is formed from three centroids 52a, b, c of the scan data and their respective face normal 54. Triangle 51 is formed from three corresponding centroids 53a, b, c of the CAD object data.

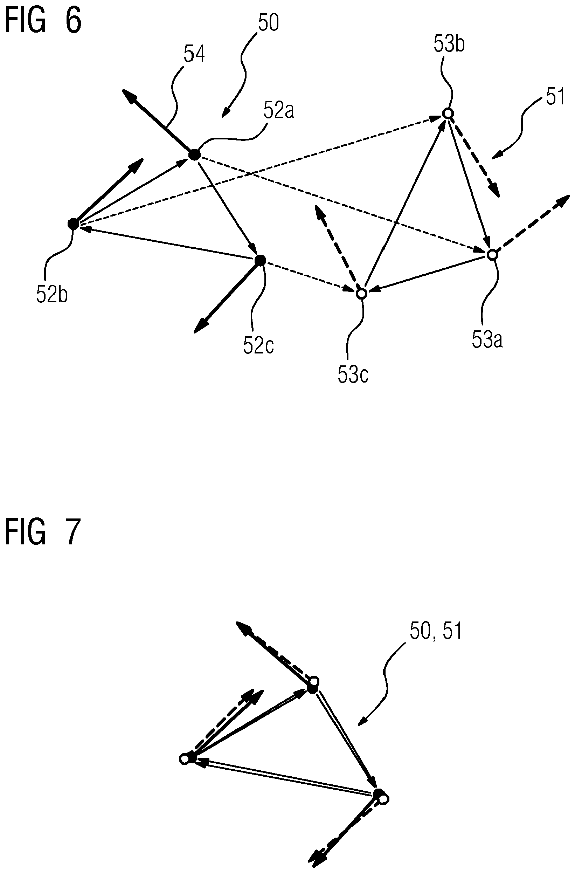

The triangles formed from scan data can be made congruent with those formed from CAD object data thus obtaining a rotation and translation for each such triangle. Fig. 6 shows the triangles 50, 51 after a suitable rotation and translation have been calculated and applied. When many different triangles are formed and rotations and translations calculated, such rotations and translations that correspond to the actual rotation and translation between the scan data and the CAD object data will occur for many triangles and can thus be identified.

It is important to note that when forming a triangle, for each partition 150 of the scan data only the partition 150 of the CAD object data that is the most likely equivalent need be considered. This correspondence is established as described above with the correlation coefficient. Thus, the number of required calculations is greatly reduced.

Given the spatial alignment found with the pair of partitions of the highest correlation coefficient, one of the point clouds is then transformed, i.e., rotated and translated, and the final alignment optimized. As much as computational power allows, this process can be repeated with partitions of lower correlation coefficient to find better correspondence between the point clouds unless the first alignment is already sufficiently good.

With the method as described in accordance with figure 2, point clouds representing parts of the surface of an object can be stitched together to form a point cloud representing the entire surface of the object. However, such a resulting point cloud still has a completely arbitrary spatial orientation and thus misses a spatial relationship to any other representation of the object 40, such as in a CAD program.

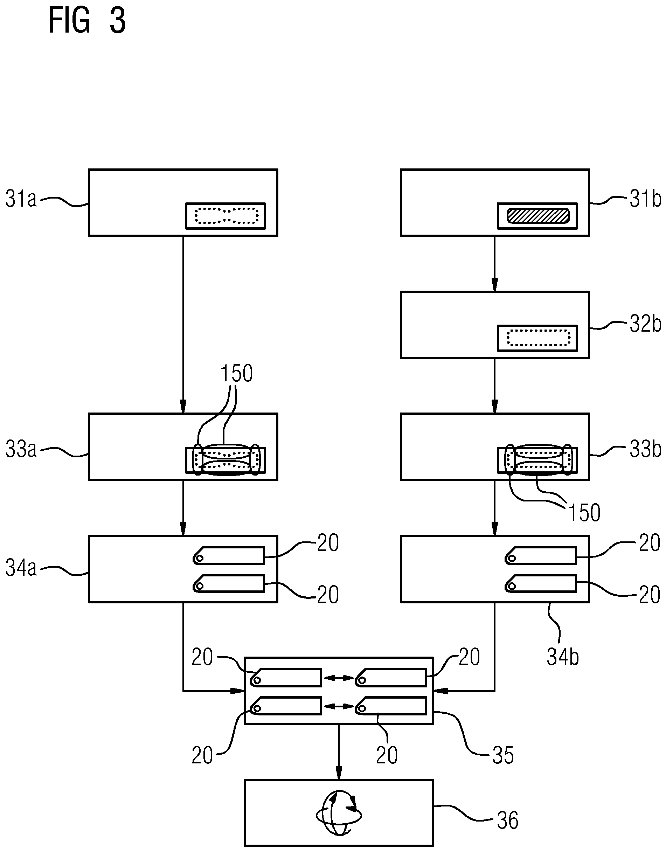

Fig. 3 shows a method according to an embodiment of the invention which comprises steps involved in performing a spatial alignment of a third point cloud to a representation of an object 40 as it is used in CAD software (Computer-aided design). Such a representation typically uses primitive surface types or volume types to model an object, such as cuboids, cylinders and spheres and planes. The third point cloud in turn is a substantially complete scan of the surface of a real-world object that is formed according to the CAD representation.

Fig. 4 shows a three-dimensional view of an object 40 obtained from its CAD data. The surface of object 40 is composed of bounded planes as well as sectors of cylinders and of spheres. Fig. 5 shows a three-dimensional view of a point cloud 50 obtained from a scan of an actual object 45 of the form shown in fig. 4.

In the method of fig. 3, the third point cloud and the CAD representation are provided in first steps 31a, b. In a second step 32b a fourth point cloud is obtained from the CAD representation of the object. This fourth point cloud can be assembled by replacing all exterior surfaces of the object with a regular or irregular grid of points all of which lie on any of the exterior surfaces.

In third steps 33a, b, both the third and fourth point clouds are partitioned. This partitioning is conducted to follow the natural geometric features of the point clouds as in the example of fig. 2. The partitioning is conducted in such a way as to create partitions 150 that are substantially smaller than the point clouds themselves but on the other hand still combine enough points in each partition 150 that the number of partitions 150 is substantially smaller than the number of points in the respective point cloud.

In fourth steps 34a, b, feature descriptors 20 are generated for the partitions 150 of both the third and fourth point clouds. The feature descriptors 20 comprise a set of features that are shared by the points or most of the points of a given partition 150. Examples for the features have already been given above.

When feature descriptors 20 have been calculated and assigned, the feature descriptors 20 of the third and fourth point clouds are compared to identify partitions of the those point clouds that correspond to each other. Various ways to accomplish this objective have already been described above.

Contrary to the method fig. 2, in this method both point clouds represent the whole object surface. Therefore, every notional surface of the third point may be expected to correspond to a surface of the CAD representation or to a notional surface found as a partition of the fourth point cloud. Therefore, there are additional restraints on what a good correspondence between the partitions of the point clouds is which may be used to find a solution faster.

When a suitable correspondence has been found, in a sixth step 36 the third point cloud is rotated and translated to find a good alignment with the fourth point cloud and therefore with the object as represented with the CAD model.

List of reference numbers

**[0068]**

| 1 | object |
|---|---|
| 2 | scanner device |
| 3, 4 | viewpoints |
| 5, 6 | surface areas |
| 11...15 | method steps |
| 20 | feature descriptor |
| 11a, b, 31a, b | first steps |
| 12a, b, 32 | second step |
| 13a, b, 33a, b | third steps |
| 14, 34a, b | fourth steps |
| 15, 35 | fifth step |
| 36 | sixth step |
| 40 | object |
| 45 | point cloud |
| 50, 51 | triangles |
| 52a...c, 53a...c | centroids |
| 54 | face normals |
| 130 | region of overlap |
| 150 | partition |

**Claims**

1. A method for aligning a point cloud (45) that represents a three-dimensional object (1, 40) or a part of such an object (1, 40), to a second dataset that represents said object (1, 40) or a part of said object (1, 40), comprising the steps:

   - segmenting (12a, b, 33a, b) the point cloud (45) and the second dataset into partitions (150), each partition (150) comprising a subset of the points of the point cloud (45) or a subset of the dataset, respectively,
   - generating (13a, 34a) feature descriptors (20) for some or all of the partitions (150) of the point cloud, wherein the feature descriptors (20) are derived from characteristics of the points of the partition (150), of points of other partitions (150) or of feature descriptors (20) of other partitions (150),
   - generating (13b, 34b) feature descriptors (20) for some or all of the partitions (150) of the second dataset,
   - comparing (14, 35) feature descriptors (20) of the point cloud and the second dataset to identify partitions (150) of the point cloud (45) and second dataset that correspond to each other,
   - performing (15, 36) a spatial alignment using the identified partitions (150),

   wherein the feature descriptors (20) comprise one or more of: size of the point cloud, contour of the point cloud, shortest and/or longest distance of points of the point cloud, curvature of the point cloud, orientation, center of gravity or centroid, neighbor information, normal vector, distribution, type, texture.

2. Method according to claim 1, wherein the feature descriptors (20) further comprise one or more of: axis length and radius, equation of a mathematical representation.

3. The method of claims 1 or 2 wherein the segmenting (12a, b, 33a, b) is arranged to separate the point cloud according to geometrical features of the point cloud.

4. The method of any of the preceding claims wherein the second dataset is a point cloud.

5. The method of claim 4 wherein the second dataset represents different part of the object (1, 40) than the point cloud.

6. The method of any of claims 1 to 3 wherein the second dataset is a CAD model of the object (1, 40).

7. The method of claim 6 wherein a point cloud is mathematically generated from the CAD model and used as the second dataset,

8. The method of any of the preceding claims wherein comparing (14, 35) the feature descriptors (20) comprises assembling a histogram of all generated feature descriptors (20).

9. The method of any of the preceding claims wherein comparing (14, 35) the feature descriptors (20) comprises calculating a correspondence coefficient for pairs of feature descriptors from the point cloud (45) and second dataset.

10. The method of any of the preceding claims wherein planar partitions (150) use the centroid as a feature descriptor.

11. The method of any of the preceding claims wherein for planar partitions (150) rectangle side lengths are identified by principal component analysis.

12. The method of claim 11 wherein an area of the partition (150) and/or an aspect ratio of the partition (150) are used as feature descriptors.

13. The method of claim 12 wherein both an area of the partition (150) and an aspect ratio of the partition (150) are used as feature descriptors and a combined correspondence coefficient is calculated for each pair of feature descriptors from the point cloud (45) and second dataset.

14. The method of claim 13 wherein partitions (150) of the point cloud (45) are grouped, a corresponding group of the second dataset is determined by taking the most likely corresponding partition (150) from the correspondence coefficient and the relation of the feature descriptors between partitions (150) in the groups are compared.

FIG 1

# FIG 2

## FIG 3

EP 4 231 238 A1

## FIG 4

40

## FIG 5

45

12

EP 4 231 238 A1

FIG 6

FIG 7

13

**EUROPEAN SEARCH REPORT**

Application Number

EP 22 15 7055

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZONG WENPENG ET AL: "A Fast and Accurate Planar-Feature-Based Global Scan Registration Method", IEEE SENSORS JOURNAL, IEEE, USA, vol. 19, no. 24, 15 December 2019 (2019-12-15), pages 12333-12345, XP011753678, ISSN: 1530-437X, DOI: 10.1109/JSEN.2019.2940478 [retrieved on 2019-12-04] | 1,3-5, 9-13 | INV. G06T7/33 |
| Y | * abstract * <br> * section III * <br> * figure 1 * | 6-8 | |
| X | ZHANG LONG ET AL: "Efficient Pairwise 3-D Registration of Urban Scenes via Hybrid Structural Descriptors", IEEE TRANSACTIONS ON GEOSCIENCE AND REMOTE SENSING, IEEE, USA, vol. 60, 2 July 2021 (2021-07-02), pages 1-17, XP011897669, ISSN: 0196-2892, DOI: 10.1109/TGRS.2021.3091380 [retrieved on 2022-01-12] | 1-5,9,14 | |
| | | | TECHNICAL FIELDS SEARCHED (IPC) |
| | | | G06T |
| Y | * abstract * <br> * sections III, IV * <br> * figures 2-5 * | 6-8 | |

-/--

The present search report has been drawn up for all claims

| Place of search | Date of completion of the search | Examiner |
|---|---|---|
| Munich | 21 July 2022 | Engels, Angela |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 3

Europäisches
Patentamt

European
Patent Office

Office européen
des brevets

## EUROPEAN SEARCH REPORT

**Application Number**

EP 22 15 7055

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | XIAOSHUI HUANG ET AL: "A Systematic Approach for Cross-source Point Cloud Registration by Preserving Macro and Micro Structures", ARXIV.ORG, CORNELL UNIVERSITY LIBRARY, 201 OLIN LIBRARY CORNELL UNIVERSITY ITHACA, NY 14853, 18 August 2016 (2016-08-18), XP080720599, | 1,3-5,9, 14 | |
| Y | * abstract * <br> * sections III, IV * <br> * figure 3 * <br> ----- | 6-8 | |
| X | XU YUSHENG ET AL: "Toward Building and Civil Infrastructure Reconstruction From Point Clouds: A Review on Data and Key Techniques", IEEE JOURNAL OF SELECTED TOPICS IN APPLIED EARTH OBSERVATIONS AND REMOTE SENSING, IEEE, USA, vol. 14, 19 February 2021 (2021-02-19), pages 2857-2885, XP011843977, ISSN: 1939-1404, DOI: 10.1109/JSTARS.2021.3060568 [retrieved on 2021-03-15] | 1,3-5,9 | |
| Y | * abstract * <br> * section II.C, 2) * <br> * table I * <br> ----- | 6-8 | TECHNICAL FIELDS SEARCHED (IPC) |
| | -/-- | | |

The present search report has been drawn up for all claims

| Place of search | Date of completion of the search | Examiner |
|---|---|---|
| Munich | 21 July 2022 | Engels, Angela |

Europäisches Patentamt
European Patent Office
Office européen des brevets

# EUROPEAN SEARCH REPORT

Application Number

EP 22 15 7055

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | BUENO MARTÍN ET AL: "4-Plane congruent sets for automatic registration of as-is 3D point clouds with 3D BIM models", AUTOMATION IN CONSTRUCTION, ELSEVIER, AMSTERDAM, NL, vol. 89, 3 February 2018 (2018-02-03), pages 120-134, XP085360265, ISSN: 0926-5805, DOI: 10.1016/J.AUTCON.2018.01.014 * abstract * * section 2.2 * ----- | 6,7 | |
| Y | XIAN-FENG HAN ET AL: "3D Point Cloud Descriptors in Hand-crafted and Deep Learning Age: State-of-the-Art", ARXIV.ORG, CORNELL UNIVERSITY LIBRARY, 201 OLIN LIBRARY CORNELL UNIVERSITY ITHACA, NY 14853, 27 July 2020 (2020-07-27), XP081701927, * abstract * * section 4.1.2, 3) * ----- | 8 | |
| | | | TECHNICAL FIELDS SEARCHED (IPC) |

The present search report has been drawn up for all claims

| Place of search | Date of completion of the search | Examiner |
|---|---|---|
| Munich | 21 July 2022 | Engels, Angela |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)